# EUROPEAN PATENT SPECIFICATION

(11) **EP 1 573 206 B1**
(45) Date of publication and mention of the grant of the patent: **03.04.2013**
(21) Application number: 03780369.9
(22) Date of filing: 09.12.2003
(51) Int. Cl.: F04D 27/02, F04D 19/04

(54) **VACUUM PUMPING ARRANGEMENT AND METHOD OF OPERATING SAME**
VAKUUMPUMPANLAGE UND DESSEN BETRIEBSVERFAHREN
AGENCEMENT DE POMPAGE A VIDE ET PROCEDE ASSOCIE

(30) Priority: 17.12.2002 GB 0229352
(43) Date of publication of application: 14.09.2005
(73) Proprietor: Edwards Limited, Crawley, West Sussex RH10 9LW (GB)
(72) Inventor: SCHOFIELD, Nigel Paul, Horsham, West Sussex RH12 2NT (GB)
(74) Representative: Clark, Charles Robert
(86) International application number: PCT/GB2003/005377
(87) International publication number: WO 2004/055378

(56) References cited:
- EP-A- 0 226 039
- EP-A- 0 340 685
- EP-A- 0 900 940
- EP-A- 1 081 380
- EP-A- 1 213 482
- EP-A- 1 234 982
- EP-A2- 1 201 929
- US-A- 3 616 680
- US-A1- 2002 136 643

## Description

The present invention relates to a vacuum pumping arrangement and a method of controlling pressure in a chamber connected to an inlet of a vacuum pumping arrangement.

A known vacuum pumping arrangement for evacuating a chamber comprises a molecular pump which may include: molecular drag pumping means; or turbomolecular pumping means; or both molecular drag pumping means and turbomolecular pumping means. If both pumping means are included the turbomolecular pumping means are connected in series with the molecular drag pumping means. The pumping arrangement is capable of evacuating the chamber to very low pressures in the region of 1x10⁻⁶ mbar. The compression ratio achieved by the molecular pump is not sufficient to achieve such low pressures whilst at the same time exhausting to atmosphere and therefore a backing pump is provided to reduce pressure at the exhaust of the molecular pump and hence permit very low pressures to be achieved at the inlet thereof.

The turbomolecular pumping means of a molecular pump comprises a circumferential array of angled blades supported at a generally cylindrical rotor body. During normal operation the rotor is rotated between 20,000 and 200,000 revolutions per minute during which time the rotor blades collide with molecules in a gas urging them towards the pump outlet. Normal operation occurs therefore at molecular flow conditions at pressures of less than about 0.01 mbar. As it will be appreciated, the turbomolecular pumping means does not work effectively at high pressures, at which the angled rotor blades cause undesirable windage, or resistance to rotation of the rotor.

During semiconductor processing, it is often required that the pressure in the processing chamber is modified for different processing techniques and different gases used. Control of the pressure at the inlet of the molecular pump is therefore important. Hereto, a number of ways have been proposed to control inlet pressure and these include the provision of a throttle valve between the inlet and the chamber, or between the outlet of the molecular pump and the inlet of the backing pump. Although control of the speed of rotation of the molecular pump would affect inlet pressure, a typical motor used for driving the molecular pump is not sufficiently powerful to control the speed of rotation quickly enough to meet the required rates of pressure change and the use of a more powerful motor has not been considered practical when other less expensive methods of pressure control are available.

EP-A-1 213 482 describes a pumping arrangement for changing the pressure in a vacuum vessel, comprising a first molecular pumping mechanism and a second pumping mechanism backing the first pumping mechanism. The invention is characterised in that the pressure in the vacuum vessel is controlled by independently changing the speed of rotation of the second pump mechanism portion to vary the back pressure of the first pumping mechanism and thus change its pumping efficiency.
EP 1 201 929 discloses a similar pumping arrangement wherein the first and second pumping mechanisms are driven by a common shaft.

It is desirable to provide an improved vacuum pumping arrangement and method of controlling pressure in a chamber connected to an inlet of a vacuum pumping arrangement.

The present invention provides a vacuum pumping arrangement for controlling pressure in a chamber, the arrangement comprising a molecular pumping mechanism and a backing pumping mechanism said backing pumping mechanism being rotatable by a motor and being arranged to exhaust gas at atmospheric pressure, wherein the molecular pumping mechanism comprises turbomolecular pumping means, and said motor is arranged to rotate said molecular pumping mechanism simultaneously with said backing pumping mechanism, wherein the molecular pumping mechanism and the backing pumping mechanism are arranged to be driven by a common drive shaft which is arranged to be driven by said motor and characterised in that:
the backing pumping mechanism is a regenerative pumping mechanism, and the arrangement also comprises means for controlling the rotational speeds of the backing pumping mechanism and the molecular pumping mechanism said the control means comprising means for measuring the pressure in the chamber, and means for changing the rotational speeds of the mechanisms in dependence on the measured pressure.

The present invention also provides a method of controlling pressure in a chamber connected to an inlet of a vacuum pumping arrangement comprising a backing pumping mechanism and a turbo molecular pumping mechanism, and a motor for driving said backing pumping mechanism said backing pumping mechanism and the molecular pumping mechanism being coupled to a common drive shaft; characterised in that the method comprises using the motor to control rotation of the common drive shaft thereby to control pressure in said chamber and exhausting gas from the backing pumping mechanism at atmospheric pressure.

Other aspects of the present invention are defined in the accompanying claims.

In order that the present invention may be well understood, some embodiments thereof, which are given by way of example only, will now be described with reference to the accompanying drawings, in which:
Figure 1 is a cross-sectional view of a vacuum pumping arrangement shown schematically;
Figure 2 is an enlarged cross-sectional view of a portion of a regenerative pump of the arrangement shown in Figure 1;
Figure 3 is a diagram of a control system;
Figure 4 is a schematic representation of a vacuum pumping system;
Figure 5 is a schematic representation of another vacuum pumping system; and
Figures 6 to 8 are cross-sectional views of further vacuum pumping arrangements all shown schematically.

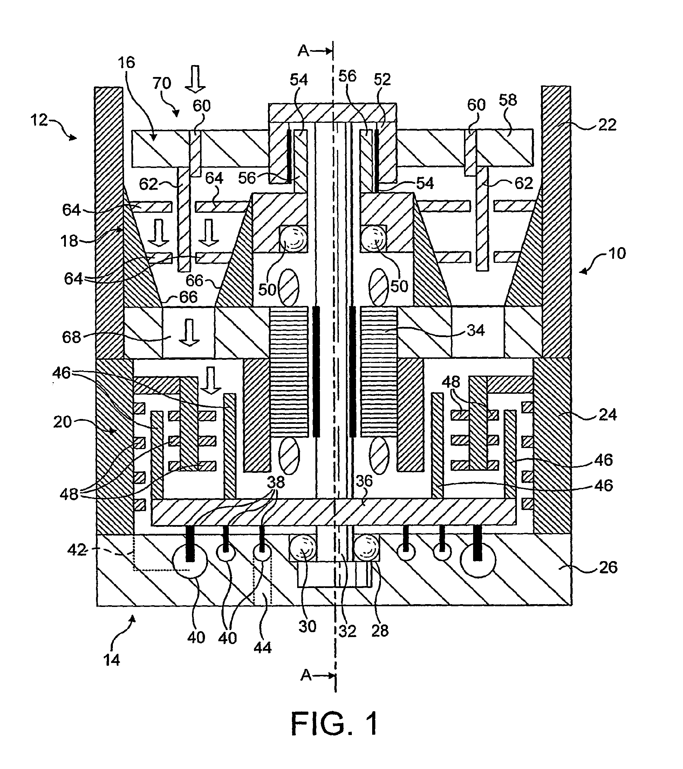

Referring to Figure 1, a vacuum pumping arrangement 10 is shown schematically, which comprises a molecular pumping mechanism 12 and a backing pumping mechanism 14. The molecular pumping mechanism comprises turbomolecular pumping means 16 and molecular drag, or friction, pumping means 18. Alternatively, the molecular pumping mechanism may comprise turbomolecular pumping means only or molecular drag pumping means only. The backing pump 14 comprises a regenerative pumping mechanism. A further drag pumping mechanism 20 may be associated with the regenerative pumping mechanism and provided between drag pumping mechanism 18 and regenerative pumping mechanism 14. Drag pumping mechanism 20 comprises three drag pumping stages in series, whereas drag pumping mechanism 18 comprises two drag pumping stages in parallel.

Vacuum pumping arrangement 10 comprises a housing, which is formed in three separate parts 22, 24, 26, and which houses the molecular pumping mechanism 12, drag pumping mechanism 20 and regenerative pumping mechanism 14. Parts 22 and 24 may form the inner surfaces of the molecular pumping mechanism 12 and the drag pumping mechanism 20, as shown. Part 26 may form the stator of the regenerative pumping mechanism 14.

Part 26 defines a counter-sunk recess 28 which receives a lubricated bearing 30 for supporting a drive shaft 32, the bearing 30 being at a first end portion of the drive shaft associated with regenerative pumping mechanism 14. Bearing 30 may be a rolling bearing such as a ball bearing and may be lubricated, for instance with grease, because it is in a part of the pumping arrangement 10 distal from the inlet of the pumping arrangement. The inlet of the pumping arrangement may be in fluid connection with a semiconductor processing chamber in which a clean environment is required.

Drive shaft 32 is a common drive shaft to which both the molecular pumping mechanism 12 and backing pumping mechanism 14 are coupled and which is driven by motor 34 for rotating the molecular pumping mechanism 12 and backing pumping mechanism 14 at the same rotational speed.

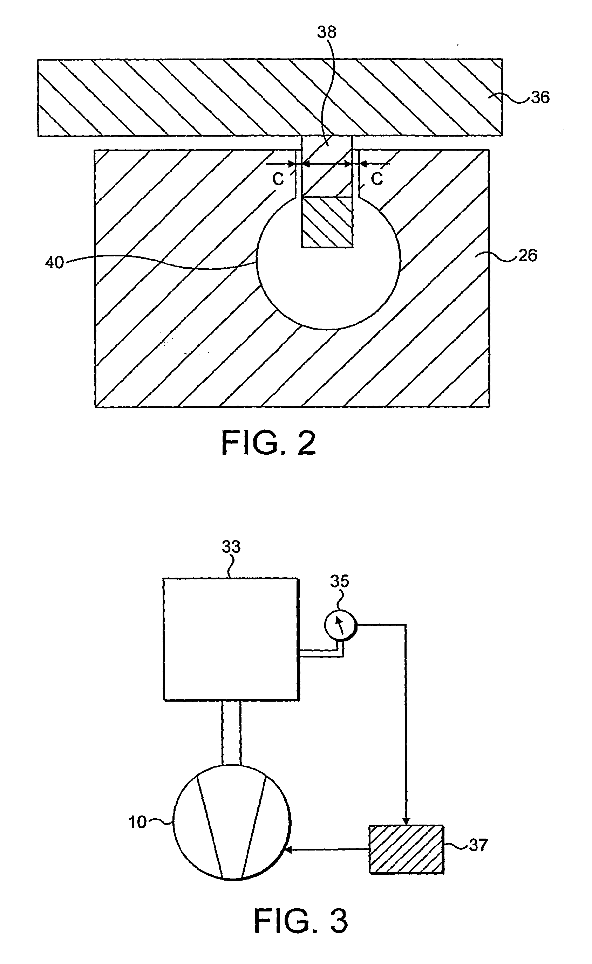

The motor 34 is supported by parts 22 and 24 of the housing but may be supported at any convenient position in the vacuum pumping arrangement. In view of the common drive shaft 32, motor 34 is able to drive simultaneously the regenerative pumping mechanism 14, and the drag pumping mechanism 20 supported thereby, and also the molecular pumping mechanism 12. Generally, a regenerative pumping mechanism requires more power for operation than a molecular pumping mechanism, the regenerative pumping mechanism operating at pressures close to atmosphere where windage and air resistance is relatively high. A molecular pumping mechanism requires relatively less power for operation, and therefore, a motor selected for powering a regenerative pumping mechanism is also generally suitable for powering a molecular pumping mechanism. Means are provided for controlling the rotational speeds of the backing pumping mechanism and the molecular pumping mechanism so that pressure in a chamber connected to, or operatively associated with, the arrangement can be controlled. A suitable control system diagram for controlling speed of the motor 34 is shown in Figure 3 and includes a pressure gauge 35 for measuring pressure in a chamber 33, and a controller 37 connected to the pressure gauge for controlling the pump's rotational speed.

Regenerative pumping mechanism 14 comprises a stator comprising a plurality of circumferential pumping channels disposed concentrically about a longitudinal axis A of the drive shaft 32 and a rotor comprising a plurality of arrays of rotor blades extending axially into respective said circumferential pumping channels. More specifically, regenerative pumping mechanism 14 comprises a rotor fixed relative to drive shaft 32. The regenerative pumping mechanism 14 comprises three pumping stages, and for each stage, a circumferential array of rotor blades 38 extends substantially orthogonally from one surface of the rotor body 36. The rotor blades 38 of the three arrays extend axially into respective circumferential pumping channels 40 disposed concentrically in part 26 which constitutes the stator of the regenerative pumping mechanism 14. During operation, drive shaft 32 rotates rotor body 36 which causes the rotor blades 38 to travel along the pumping channels, pumping gas from inlet 42 in sequence along the radially outer pumping channel, radially middle pumping channel and radially inner pumping channel where it is exhausted from pumping mechanism 14 via exhaust 44 at pressures close to or at atmospheric pressure.

An enlarged cross-section of a single stage of the regenerative pumping mechanism is shown in Figure 2. For efficient operation of the regenerative pumping mechanism 14, it is important that the radial clearance "C" between rotor blades 38 and stator 26 is closely controlled, and preferably kept to no more than 200 microns or less, and preferably less than 80 microns, during operation. An increase in clearance "C" would lead to significant seepage of gas out of pumping channel 40 and reduce efficiency of regenerative pumping mechanism 14. Therefore, regenerative pumping mechanism 14 is associated with the lubricated rolling bearing 30 which substantially resists radial movement of the drive shaft 32 and hence rotor body 36. However, if there is radial movement of the drive shaft at an end thereof distal from the lubricated bearing 30, this may also cause radial movement of the rotor of the regenerative pumping mechanism, resulting in loss of efficiency. In other words, bearing 30 may act as a pivot about which some radial movement may take place. To avoid loss of efficiency, the rotor 36 of the regenerative pumping mechanism is connected to the drive shaft 32 so as to be sufficiently close to the lubricated bearing 30 (i.e. the pivot) so that radial movement of the drive shaft translates substantially to axial movement of the rotor blades relative to respective circumferential pumping channels 40. Preferably, the bearing 30 is substantially axially aligned with the circumferential pumping channels so that any -radial movement of the rotor blades 38 does not cause significant seepage. As shown, the stator 26 of the regenerative pumping mechanism 14 defines the recess for the bearing 30 and the rotor body 36 is, as it will be appreciated, adjacent the stator 26. Accordingly, the bearing 30, which resists radial movement, prevents significant radial movement of the rotor body 36 and also hence of the rotor blades 38. Therefore, clearance "C" between the rotor blades 38 and stator 26 can be kept within tolerable limits.

Extending orthogonally from the rotor body 36 are two cylindrical drag cylinders 46 which together form rotors of drag pumping mechanism 20. The drag cylinders 46 are made from carbon fibre reinforced material which is both strong and light. The reduction in mass when using carbon fibre drag cylinders, as compared with the use of aluminium drag cylinders, produces less inertia when the drag pumping mechanism is in operation. Accordingly, the rotational speed of the drag pumping mechanism is easier to control.

The drag pumping mechanism 20 shown schematically is a Holweck type drag pumping mechanism in which stator portions 48 define a spiral channel between the inner surface of housing part 24 and the drag cylinders 46. Three drag stages are shown, each of which provides a spiral path for gas flow between the rotor and the stator. The operation and structure of a Holweck drag pumping mechanism is well known. The gas flow follows a tortuous path flowing consecutively through the drag stages in series.

The molecular pumping mechanism 12 is driven at a distal end of drive shaft 32 from the regenerative pumping mechanism 14. A back up bearing may be provided to resist extreme radial movement of the drive shaft 32 during, for instance, power failure. As shown, the lubricant free bearing is a magnetic bearing 54 provided between rotor body 52 and a cylindrical portion 56 fixed relative to the housing 22. A passive magnetic bearing is shown in which like poles of a magnet repel each other resisting excessive radial movement of rotor body 52 relative to the central axis A. In practice, the drive shaft may move about 0.1 mm.

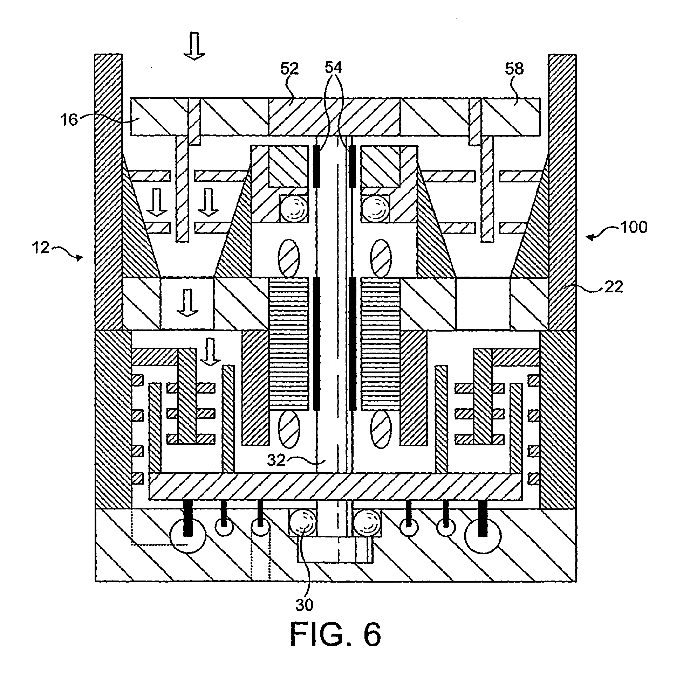

A small amount of radial movement of the rotor of a molecular pumping mechanism does not significantly affect the pumping mechanism's performance. However, if it is desired to further resist radial movement, an active magnetic bearing may be adopted. In an active magnetic bearing, electro magnets are used rather than permanent magnets in passive magnetic bearings. Further provided is a detection means for detecting radial movement and for controlling the magnetic field to resist the radial movement. Figures 6 to 8 show an active magnetic bearing.

A circumferential array of angled rotor blades 58 extend radially outwardly from rotor body 52. At approximately half way along the rotor blades 58 at a radially intermediate portion of the array, a cylindrical support ring 60 is provided, to which is connected drag cylinder 62 of drag pumping mechanism 18. Drag pumping mechanism 18 comprises two drag stages in parallel with a single drag cylinder 62, which may be made from carbon fibre to reduce inertia. Each of the stages is comprised of stator portions 64 forming with the tapered inner walls 66 of the housing 22 a spiral molecular gas flow channel. An outlet 68 is provided to exhaust gas from the drag pumping mechanism 18.

During normal operation, inlet 70 of pump arrangement 10 is connected to a chamber, the pressure of which it is desired to reduce. Motor 34 rotates drive shaft 32 which in turn drives rotor body 36 and rotor body 52. Gas in molecular flow conditions is drawn in through inlet 70 to the turbomolecular pumping means 16 which urges molecules into the molecular drag pumping means 18 along both parallel drag pumping stages and through outlet 68. Gas is then drawn through the three stages in series of the drag pumping mechanism 20 and into the regenerative pumping mechanism through inlet 42. Gas is exhausted at atmospheric pressure or thereabouts through exhaust port 44.

Regenerative pumping mechanism 14 is required to exhaust gas at approximately atmospheric pressure. Accordingly, the gas resistance to passage of the rotor blades 38 is considerable and therefore the power and torque characteristics of motor 34 must be selected to meet the requirements of the regenerative pumping mechanism 14. The resistance to rotation encountered by the molecular pumping mechanism 12 is relatively little, since the molecular pumping mechanism operates at relatively low pressures. Furthermore, the structure of the drag pumping mechanism 18 with its only moving part being a cylinder rotated about axis A does not suffer significantly from gas resistance to rotation. Therefore, once power and torque characteristics for motor 34 have been selected for regenerative pumping mechanism 14, only a relatively small proportion of extra capacity is needed so that the motor also meets the requirements of molecular pumping mechanism 12. In other words, a 200w motor, which is typically used for a molecular pumping mechanism, is significantly less powerful than motor 34 which preferably is a 2kw motor. In the prior art, the typical motor is not sufficiently powerful for pressure change in a chamber to be controlled by controlling the rotational speed of the pump. However, since a powerful motor is selected to drive regenerative pumping mechanism 14, the additional power can also be used to control rotational speed of the molecular pumping mechanism and thereby control pressure.

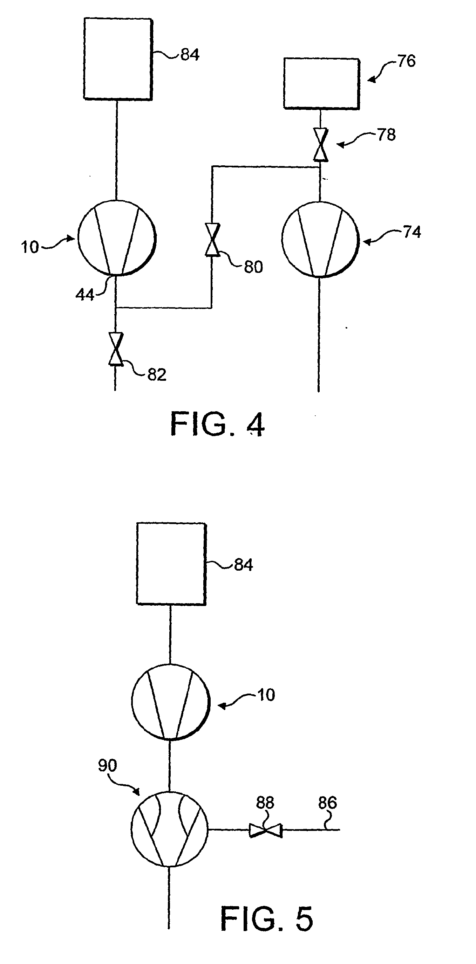

A typical turbomolecular pumping means is evacuated to relatively low pressures before it is started up. In the prior art, a backing pumping mechanism is used for this purpose. Since the backing pumping mechanism and turbomolecular pumping means are associated with the same drive shaft in vacuum pumping arrangement 10, this start up procedure is not possible. Accordingly, the vacuum pumping arrangement forms part of a vacuum pumping system which comprises additional evacuation means to evacuate at least the turbomolecular pumping means 16 prior to start up to a predetermined pressure. Preferably, the turbomolecular pumping means is evacuated to less than 500 mbar prior to start up. Conveniently, the whole vacuum pumping arrangement is evacuated prior to start up, as shown in Figures 4 and 5. The evacuation means may be provided by an additional pump, although this is not preferred since an additional pump would increase costs of the system. When the pumping arrangement 10 is used as part of a semi-conductor processing system, it is convenient to make use of a pump or pumping means associated with the system such as the pump for the load lock chamber. Figure 4 shows the arrangement of a semiconductor processing system, in which the load lock pump 74 is, in normal use, used to evacuate pressure from load lock chamber 76. A valve 78 is provided between load lock chamber 76 and load lock pump 74. Load lock pump 74 is connected to the exhaust of pumping arrangement 10 via valve 80. A further valve 82 is provided downstream of exhaust 44 of pumping arrangement 10. During start up, valve 78 and valve 82 are closed whilst valve 80 is opened. Load lock pump 74 is operated to evacuate gas from arrangement 10 and therefore from turbomolecular pumping means 16. During normal operation, valves 82 and 78 are opened whilst valve 80 is closed. Arrangement 10 is operated to evacuate pressure from vacuum chamber 84.

Alternatively, vacuum pumping arrangement 10 can be started up as described with reference to Figure 5. The additional evacuation means comprises a high pressure nitrogen supply which is connected to an ejector pump 90 via valve 88. Valve 88 is opened so that high pressure nitrogen is ejected to evacuate arrangement 10 and therefore turbomolecular pumping means 16. Nitrogen is a relatively inert gas and does not contaminate the system.

Although the pumping arrangement 10 may be evacuated prior to start up, it is also possible to evacuate the arrangement after start up, since the arrangement can be started but will not reach suitable rotational speeds until evacuation is performed.

There now follows a description of three further embodiments of the present invention. For brevity, the further embodiments will be discussed only in relation to the parts thereof which are different to the first embodiment and like reference numerals will be used for like parts.

Figure 6 shows a vacuum pumping arrangement 100 comprising an active magnetic bearing in which a cylindrical pole of the magnetic bearing 54 is mounted to the drive shaft 32 with a like pole being positioned on housing 22. The rotor body 52 of the turbomolecular pumping means 16 of the molecular pumping mechanism, is disc-shaped and the overall size of the arrangement 100 is reduced as compared with the first embodiment.

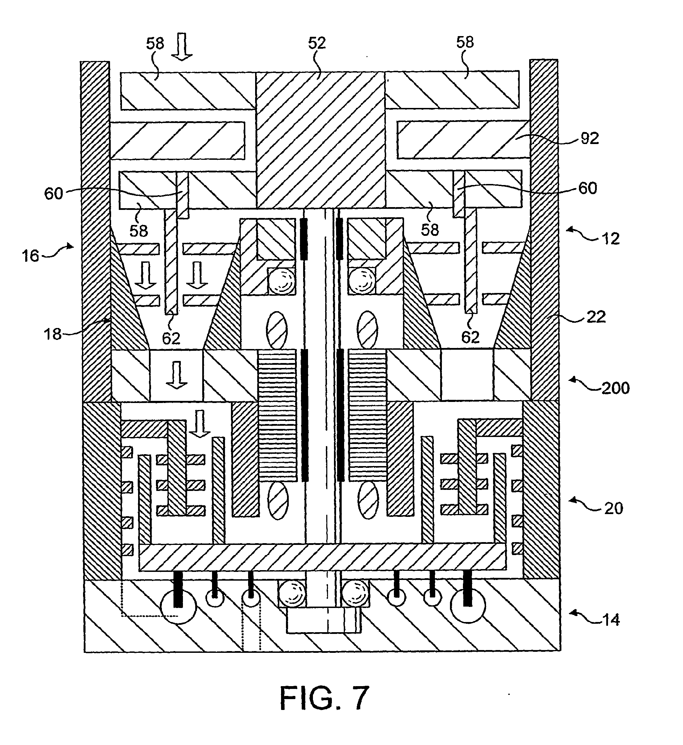

In Figure 7, a vacuum pumping arrangement 200 is shown in which the turbomolecular pumping means 12 comprises two turbomolecular pumping stages 16. A stator 92 extends radially inwardly from housing part 22 between the two turbo stages 16.

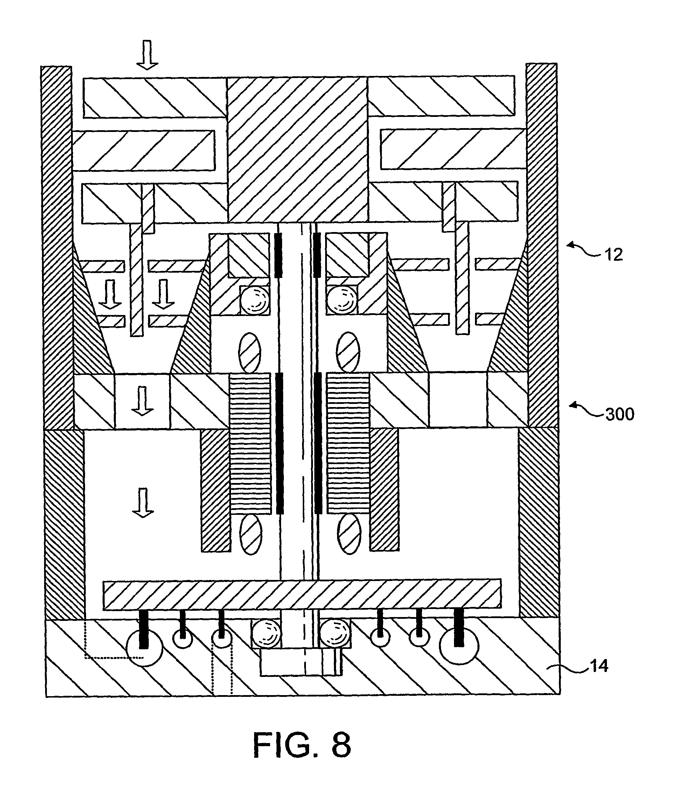

In Figure 8, a vacuum pumping arrangement 300 is shown in which molecular drag pumping mechanism 20 has been omitted.

## Claims

1. A vacuum pumping arrangement (10) for controlling pressure in a chamber, the arrangement (10) comprising a molecular pumping mechanism (12) and a backing pumping mechanism (14) said backing pumping mechanism (14) being rotatable by a motor (34) and being arranged to exhaust gas at atmospheric pressure, wherein the molecular pumping mechanism comprises turbomolecular pumping means, and said motor (34) is arranged to rotate said molecular pumping mechanism (12) simultaneously with said backing pumping mechanism (14), wherein the molecular pumping mechanism (12) and the backing pumping mechanism (14) are arranged to be driven by a common drive shaft (32) which is arranged to be driven by said motor (34) and **characterised in that**:
the backing pumping mechanism (14) is a regenerative pumping mechanism (14), and the arrangement (10) also comprises means (37) for controlling the rotational speeds of the backing pumping mechanism (14) and the molecular pumping mechanism (12) said the control means (37) comprising means (35) for measuring the pressure in the chamber (33), and means (37) for changing the rotational speeds of the mechanisms in dependence on the measured pressure.

2. A vacuum pumping arrangement (10) as claimed in claim 1, wherein said molecular pumping mechanism (12) also comprises molecular drag pumping means (18,20).

3. A vacuum pumping arrangement (10) as claimed in claim 2, wherein said molecular drag pumping means (18, 20) comprises Holweck pumping means.

4. A vacuum pumping arrangement (10) as claimed in claim 3, wherein a holweck cylinder (46) of the Holweck pumping means (18, 20) is formed from carbon fibre reinforced material.

5. A method of controlling pressure in a chamber (33) connected to an inlet (70) of a vacuum pumping arrangement (10) comprising a backing pumping mechanism (14) and a turbo molecular pumping mechanism (12), and a motor (34) for driving said backing pumping mechanism (14) said backing pumping mechanism (14) and the molecular pumping mechanism (12) being coupled to a common drive shaft (32); **characterised in that** the method comprises using the motor (34) to control rotation of the common drive shaft (32) thereby to control pressure in said chamber (33) and exhausting gas from the backing pumping mechanism at atmospheric pressure.

## Patentansprüche

1. Vakuumpumpenanordnung (10) zur Steuerung des Drucks in einer Kammer, wobei die Anordnung (10) einen Molekularpumpenmechanismus (12) und einen Stützpumpenmechanismus (14) umfasst, wobei der Stützpumpenmechanismus (14) durch einen Motor (34) drehbar und dafür angeordnet ist, Gas auf atmosphärischem Druck auszustoßen, und wobei der Molekularpumpenmechanismus Turbomolekularpumpenmittel aufweist, und wobei der genannte Motor (34) dafür angeordnet ist, den Molekularpumpenmechanismus (12) gleichzeitig mit dem Stützpumpenmechanismus (14) zu drehen, und wobei der Molekularpumpenmechanismus (12) und der Stützpumpenmechanismus (14) dafür angeordnet sind, durch eine gemeinsame Antriebswelle (32) angetrieben zu werden, die durch den Motor (34) antreibbar ist, und **dadurch gekennzeichnet, dass**:
der Stützpumpenmechanismus (14) ein Regenerativpumpenmechanismus (14) ist und die Anordnung (10) außerdem Mittel (37) zur Steuerung der Drehgeschwindigkeiten des Stützpumpenmechanismus (14) und des Molekularpumpenmechanismus (12) aufweist, wobei die Steuermittel (37) Mittel (35) zum Messen des Drucks in der Kammer (33) und Mittel (37) zur Veränderung der Drehgeschwindigkeiten des Mechanismus in Abhängigkeit von dem gemessenen Druck aufweisen.

2. Vakuumpumpenanordnung (10) nach Anspruch 1, wobei der Molekularpumpenmechanismus (12) außerdem Molekularsaugpumpenmittel (18, 20) aufweist.

3. Vakuumpumpenanordnung (10) nach Anspruch 2, wobei die Molekularsaugpumpenmittel (18, 20) Holweck-Pumpenmittel aufweisen.

4. Vakuumpumpenanordnung (10) nach Anspruch 3, wobei ein Holweck-Zylinder (46) der Holweck-Pumpenmittel (18, 20) aus kohlefaserverstärktem Material gebildet ist.

5. Verfahren zur Steuerung des Drucks in einer Kammer (33), die mit einem Einlaß (70) einer Vakuumpumpenanordnung (10) verbunden ist, die einen Stützpumpenmechanismus (14) und einen Turbomolekularpumpenmechanismus (12) und einen Motor (34) zum Antreiben des Stützpumpenmechanismus (14) aufweist, wobei der Stützpumpenmechanismus (14) und der Molekularpumpenmechanismus (12) mit einer gemeinsamen Antriebswelle (32) gekuppelt sind, **dadurch gekennzeichnet, dass** das Verfahren das Benutzen des Motors (34) zur Steuerung der Drehung der gemeinsamen Antriebswelle (32) und dadurch zur Steuerung des Drucks in der genannten Kammer (33) und zum Ausstoßen von Gas aus dem Stützpumpenmechanismus auf atmosphärischem Druck umfasst.

## Revendications

1. Système (10) de pompe à vide destiné à contrôler la pression dans une chambre, le système (10) comprenant un mécanisme (12) de pompage moléculaire et un mécanisme (14) de pompage primaire, ledit mécanisme (14) de pompage primaire pouvant être entraîné en rotation par un moteur (34) et étant prévu pour évacuer du gaz à pression atmosphérique, dans lequel le mécanisme de pompage moléculaire comprend des moyens de pompage turbomoléculaire, et ledit moteur (34) est prévu pour entraîner en rotation ledit mécanisme (12) de pompage moléculaire simultanément avec ledit mécanisme (14) de pompage primaire, dans lequel le mécanisme (12) de pompage moléculaire et le mécanisme (14) de pompage primaire sont prévus pour être entraînés par un arbre d'entraînement commun (32) qui est prévu pour être entraîné par ledit moteur (34), et ***caractérisé en ce que** :*
le mécanisme (14) de pompage primaire est un mécanisme de pompage régénératif (14), et le système (10) comprend aussi des moyens (37) pour contrôler les vitesses de rotation du mécanisme (14) de pompage primaire et du mécanisme (12) de pompage moléculaire, lesdits moyens de contrôle (37) comprenant des moyens (35) pour mesurer la pression dans la chambre (33) et des moyens (37) pour modifier les vitesses de rotation des mécanismes en fonction de la pression mesurée.

2. Système (10) de pompe à vide selon la revendication 1, dans lequel ledit mécanisme (12) de pompage moléculaire comprend aussi des moyens de pompage moléculaire mécanique (18, 20).

3. Système (10) de pompe à vide selon la revendication 2, dans lequel lesdits moyens de pompage moléculaire mécanique (18, 20) comprennent des moyens de pompe Holweck.

4. Système (10) de pompe à vide selon la revendication 3, dans lequel un cylindre Holweck (46) des moyens de pompe Holweck (18, 20) est fait d'un matériau renforcé de fibres de carbone.

5. Procédé de contrôle de la pression dans une chambre (33) reliée à une entrée (70) d'un système (10) de pompe à vide comprenant un mécanisme (14) de pompage primaire et un mécanisme (12) de pompage turbomoléculaire, et un moteur (34) pour entraîner ledit mécanisme (14) de pompage primaire, ledit mécanisme (14) de pompage primaire et le mécanisme (12) de pompage moléculaire étant couplés à un arbre d'entraînement commun (32), ***caractérisé en ce que*** le procédé comprend l'utilisation du moteur (34) pour contrôler la rotation de l'arbre d'entraînement commun (32) pour ainsi contrôler la pression dans ladite chambre (33) et évacuer le gaz du mécanisme de pompage primaire à pression atmosphérique.
